# EUROPEAN PATENT APPLICATION

(11) **EP 1 413 914 A2**
(43) Date of publication of application: **28.04.2004**
(21) Application number: 03078388.0
(22) Date of filing: 27.10.2003
(51) Int. Cl.: G02F 1/13

(54) **Flat display monitor and flat display panel fixing apparatus and method**

(30) Priority: 25.10.2002 KR 2002065427
(71) Applicant: LG Electronics Inc., Seoul 150-875 (KR)
(72) Inventor: Gi, Young Jang, Busan-si (KR)
(74) Representative: Ekström, Nils

(57) **Abstract**

A flat display panel fixing arrangement (9) includes a flat display panel (30), a back cover (10) on which the flat display panel is fixed by a fastener (50), and a front cover (40) fixed on the back cover.

## Description

### BACKGROUND OF THE INVENTION

### Field of the Invention

The present invention relates to a flat display monitor, a flat display panel fixing arrangement and a flat display panel fixing method, and more particularly, to a flat display monitor having a thin flat display panel such as an LCD panel to realize an image even in a narrow space and a flat display panel fixing arrangement and method by which the flat display panel is easily mounted on the display monitor through a simple process.

Particularly, the present invention relates to a flat display monitor that allows an assembling convenience to be more improved and that allows a manufacturing process to be more simplified.

In addition, the present invention further relates to a flat display panel that can be manufactured by the reduced number of parts.

### Background of the Prior Art

Generally, a flat display monitor is provided with a flat display panel such as an LCD module and a fixing frame for fixing the flat display panel. Disposed on front and rear sides of the flat display panel are respectively front and back covers defining a main body of the flat display monitor.

In addition, although the concrete shape of the flat display monitor can be varied depending on its practical use, the flat display monitor further includes a supporting structure having a first end fixed on a rear surface of the back cover and a base formed on a lower side of the supporting structure to stably support the monitor in an erected state.

The present invention is directed to the main body of the monitor. A main body of a conventional monitor will be described hereinafter.

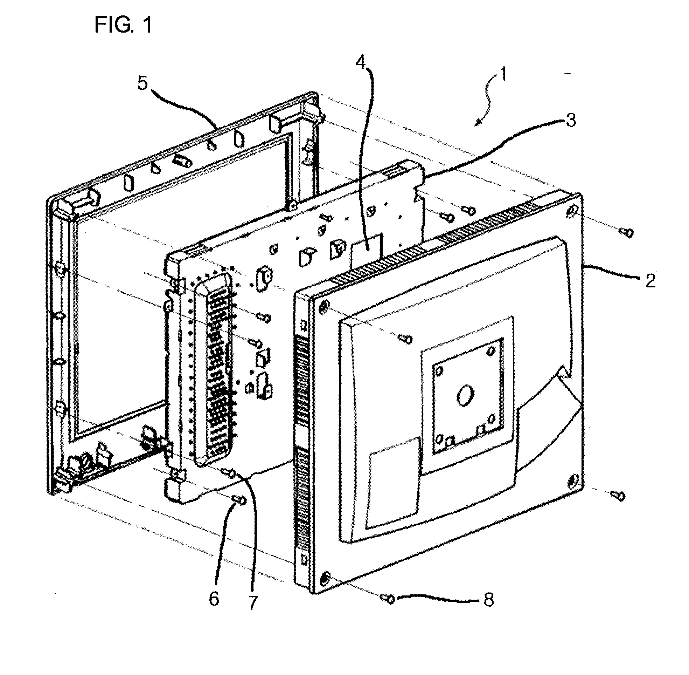

FIG. 1 shows an exploded perspective view of a main body of a conventional monitor.

Referring to FIG. 1, the conventional flat display monitor 1 includes front and back covers 5 and 2, an LCD module 4 disposed in a space defined by the front and back covers 5 and 2, and a fixing frame 3 for primarily fixing the LCD module 4.

The monitor 1 further includes a first screw group 6 for coupling the LCD module 4 and the fixing frame 3 to each other, a second screw group 7 for coupling the assembly of the LCD module 4 and the fixing frame 3 to the front cover 5, and a third screw group 8 for coupling the back cover 2 to the front cover 5.

Each of the first, second and third screw groups 6, 7 and 8 includes at least four screws provided in the vicinity of four corners of the monitor. That is, twelve screws are used for assembling the main body of the monitor.

A method for assembling parts of the monitor will be described hereinafter.

First, the LCD module 4 and the fixing frame 3 are coupled to each other by the screws of the first screw group 6. At this point, at least four corners of the LCD module 4 are aligned with four corners of the fixing frame 3, and then the aligned portions are screw-coupled.

Afterwards, the fixing frame 3 and the front panel 5 are aligned with each other at their four corners through which the screws of the second screw group 7 are inserted to securely fix the fixing frame 3 and the front panel 5 to each other.

After the fixing frame 3 is fixed to the front panel 5, the back cover 2 is fixed on the front cover 5. Likewise, the screws of the third screw group 8 are inserted through at least four corners where the front cover 5 and the back cover 2 are aligned with each other, thereby securely fixing the back cover 2 and the front cover 5.

As described above, in order to fix the back cover 2, the fixing frame 3, the LCD module 4, and the front cover 5 to each other, different screw groups each having a plurality of screws have been employed.

However, such a flat display monitor using the different screw groups has following problems.

First, since a large number of screws are required to fix the heavy LCD module, it is trouble some and time-consuming for a worker to do the screwing work for inserting the screws of the different screw groups, thereby increasing the manufacturing costs.

Second, since the relatively heavy frame 3 and the LCD module are coupled on the front cover 5 having relatively low strength, the front cover 5 may be deformed in the course of the assembling process. Therefore, there is a need for a reinforcing structure for enhancing the strength of the front cover. However, use of a reinforcing structure is further problematic when a soft material such as plastic is employed in the front cover 5 for reasons of appearance.

Third, since a plurality of processes such as a screwing process, a part conveying process and the like are required in order to assemble a flat display monitor according to methods known in the art, many workers would be needed in the production line.

### SUMMARY OF THE INVENTION

Therefore, the present invention has been made in an effort to solve the above-described problems of the conventional arts.

An object of the present invention is to provide a flat display panel fixing arrangement and method that can manufacture a flat display monitor through a simple process and to provide a flat display monitor to be manufactured by such a simple process.

Another object of the present invention is to provide a flat display monitor and a flat display panel fixing arrangement and method that can improve the reliability of products while saving the labor.

To achieve these objects and other advantages and in accordance with the purpose of the invention, as embodied and broadly described herein, there is provided a flat display panel fixing arrangement comprising a flat display panel; a fixing frame for supporting the flat display panel; a back cover having guide means for guiding aligning locations of the fixing frame and/or the flat display panel and fixing means for fixing the fixing frame and/or the flat display panel; and a front cover for receiving the flat display panel and the fixing frame, the front cover being coupled on the back cover.

In an aspect of the present invention, there is provided a flat display monitor comprising a high strength back cover having a rear surface on which a support structure is coupled; a fixing frame and/or a flat display panel fixed on an inner surface of the back cover by fixing means; and a front cover for receiving the fixing frame and/or the flat display panel, the front cover being fixed on a front surface of the back cover. By high strength is intended a back cover having sufficient rigidity to withstand deformation when carrying a display panel.

In another aspect of the present invention, there is provided a method for fixing a flat display panel, the method comprising the steps of aligning the flat display panel with a back cover; fixing the flat display panel on the back cover using a fastener; and fixing a front cover on the back cover.

Therefore, since the flat display panel is fixed on the inner surface of the back cover having a relatively strong strength, the reliability of a process for manufacturing the flat display monitor can be improved.

Furthermore, the present invention provides an advantage of simplifying an assembling process for the flat display monitor and saving the assembling time as well as labor.

In addition, the number of the screws used for assembly parts of the flat display monitor can be saved, reducing the manufacturing costs.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

FIG. 1 is an exploded perspective view of a conventional flat display monitor;

FIG. 2 is an exploded perspective view of a flat display panel fixing arrangement according to a first embodiment of the present invention;

FIG. 3 is a rear perspective view of a front cover depicted in FIG. 2;

FIG. 4 is a front perspective view of a back cover depicted in FIG. 2;

FIG. 5 is an enlarged view of a circled portion "A" of FIG. 4;

FIG. 6 is a flowchart illustrating a flat display panel fixing method according to a preferred embodiment of the present invention;

FIG. 7 is a perspective view of a flat panel display arrangement according to a second embodiment of the present invention;

FIG. 8 is a perspective view of a flat panel display arrangement according to a third embodiment of the present invention; and

FIG. 9 is a sectional view taken along lines B-B' of FIG. 8.

### DETAILED DESCRIPTION OF THE PREFERRED EMBODIMENTS

Reference will now be made in detail to a preferred embodiment of the present invention with reference to the accompanying drawings.

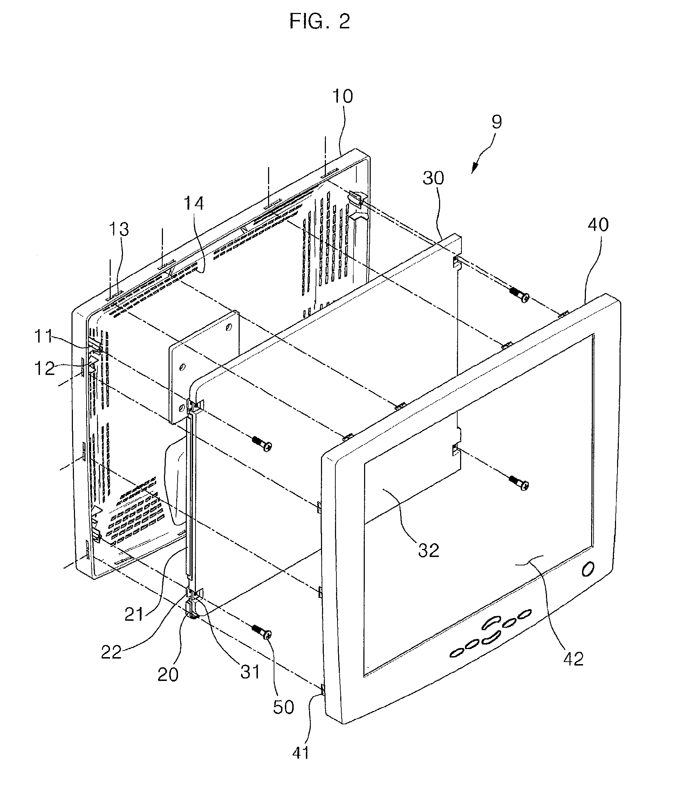

FIG. 2 shows an exploded perspective view of a flat display panel fixing arrangement according to a first embodiment of the present invention.

As shown in the drawing, the inventive flat display panel fixing arrangement 9 includes an LCD module 30, a fixing frame 20 for fixing the LCD module 30, a back cover 10 for fixing the assembly of the LCD module 30 and the fixing frame 20, and a front cover 40 formed on an opposite side of the back cover 10.

The flat display panel fixing arrangement 9 further includes fasteners 50 such as screws for fixing the assembly of the LCD module 30 and the fixing frame 20 on the back cover 10.

The back cover 10 includes a heat release holes 14 for releasing heat generated by the LCD module 30 to an outside of the monitor, fixing portions 11 through which the fasteners 50 are inserted to fix the fixing frame 20 and the LCD module 30 to each other, a plurality of guide portions 12 for aligning the assembly of the fixing frame 20 and the LCD module 30 at an accurate location on the back cover 10, and a plurality of hook portions 13 formed at side surface of the back cover 10, for fixing the front cover 40 on the back cover 10.

The guide portions 12 and the hook portions 13 may be formed on four corners of the back cover 10. Preferably at least one guide portion and one hook portion are provided in each corner. However, the number of the guide portions 12 and the hook portions 13 can be varied in accordance with the size of the module 30 and the strength of the monitor. In addition, it is preferable that the guide portions 12 are formed in the vicinity of the hook portions 13 so that the fixing frame 20 and the LCD module 30 can be guided and aligned on the more accurate location.

The hook portion 13 is provided such that a plurality of hook projections 41 formed on side portions of the front cover 40 are inserted into the hook portion 13. In order to stably support the whole surface of the front cover 40, the hook portions 13 may be equally formed throughout a whole side portion of the back cover 10.

To allow for the insertion of the fasteners 50, the LCD module 30 includes a screen portion 32 for displaying an image and panel fixing portions 31 that is formed on a periphery portion of the screen portion 32. The panel fixing portions 31 are formed of a thin plate. When the panel fixing portions 31 are aligned with the fixing portions 11, the fasteners 50 are inserted through the panel fixing portions 31 and the fixing portions 11, thereby fixing the LCD module 30 on the back cover 10.

The fixing frame 20 includes an aligning guide 21 for accurately aligning the LCD module 30 with the fixing frame 20 at an accurate location and frame fixing portions 22 through which the fasteners 50 are inserted. The aligning guide 21 is formed along a periphery portion and at a corner of the fixing frame 20, and the frame fixing portions 22 are formed on the periphery portion of the fixing frame 20 and formed of a thin plate.

The fasteners 50 are inserted through the frame fixing portions 22 and the fixing portions 11 in a state where the frame fixing portions 22 are accurately aligned with the fixing portions 11, thereby fixing the fixing frame 20 on the back cover 10.

That is, in a state where the assembly of the frame fixing portions 22, the panel fixing portions 31 and the fixing portions 11 are accurately aligned with each other, the fasteners 50 are inserted through the aligned portions, thereby simultaneously fixing the fixing frame 20 and the LCD module 30 on the back cover 10. Therefore, by a single screw insertion work using a single screw group, the fixing frame 20 and the LCD module 30 are simultaneously fixed on the back cover 10, thereby simplifying the fixing process when compared with the conventional art in which two different screw groups (see reference numerals 6 and 7) each having a plurality of screws (see reference numerals 6 and 7 in FIG. 1) are used to respectively fix the fixing frame and the LCD module to each other and the assembly of the fixing frame and the LCD module and the back cover to each other.

In addition, unlike the conventional art, since the fixing frame 20 and the LCD module 30 are fixed to the back cover 10, the support force can be improved. In other words, since the fixing frame 20 and the LCD module 30 are fixed on the supporting structure for erecting the flat display monitor and/or the back cover 10 having the high strength, for coupling the base, the high strength can be maintained, thereby increasing the reliability.

The front cover 40 includes a central opening 42 and a frame portion on which the hook projections 41 fixed by being hooked in the hook portions 13 are formed.

The central opening 42 allows a user to see the image displayed on a screen portion 32. The hook projections 41 are evenly formed on throughout the frame of the front cover 40 so that the front cover 40 can be stably fixed on the back cover 10.

That is, the front cover 40 is not fixed on the back cover 10 by fasteners such as screws, but by a simple operation for inserting the hook projections 41 into the hook portions 13. Namely, since there is no need of an additional heavy part fixed on the front cover 40, it is possible to fix the front cover 40 on the back cover 10 by a simple hook structure, without a high strength fastener such as screws. For example, in a state where the hook projections 41 are aligned with the corresponding hook portions 13, the front cover 40 is pushed toward the back cover 10 to insert the hook projections 41 into the hook portions 13, thereby coupling the front cover 40 on the back cover 10.

Meanwhile, the LCD module 30 is simply exampled as the flat display panel, not limiting the present invention. That is, any lightweight flat display panel that can realize the flat display monitor will be possible.

When the supporting structure is formed on a rear surface of the back cover 10 and the horizontal base is disposed under the supporting structure, the flat display monitor according to the present invention is completed.

The method for fixing the flat display panel will be briefly described hereinafter.

As described above, only a single group of fasteners are used in the flat display panel fixing method of the present invention to simplify the fixing process.

Describing more in detail, after the fixing frame 20 and the LCD module 30 are aligned with the back cover 10, the fasteners 50 are inserted to fix the fixing frame 20 and the LCD module 30 on the back cover 10. That is, the fixing frame 20 and the LCD module 30 are fixed on the back cover 10 by a single process step using the single group of fasteners 50.

That is, in a state where the panel fixing portions 31 and the frame fixing portions 22 are aligned with the fixing portions 11, the fasteners 50 are inserted through the aligned portions. Namely, the fixing frame 20 and the LCD module 30 are simultaneously fixed on the back cover 10 by the single group of fasteners 50.

Then, the front cover 40 is fixed on the back cover 10. That is, in a state where the hook projections 41 are aligned with the corresponding hook portions 13, the front cover 40 is pushed toward the back cover 10 to insert the hook projections 41 into the hook portions 13, thereby coupling the front cover 40 on the back cover 10.

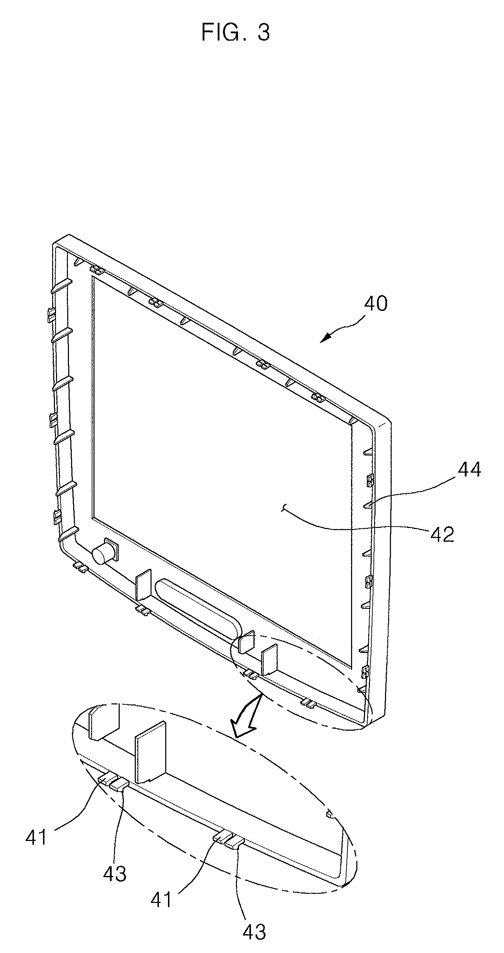

FIG. 3 shows a rear perspective view of the front cover of the flat display panel fixing arrangement according to the present invention.

Referring to FIG. 3, the front cover 40 is provided with the hook projections 41 and the opening 42 as described above. A plurality of supporting ribs 44 are formed on an inner circumference of the front cover 40. The supporting ribs 44 contact the outer circumference of the LCD module 30 to stably maintain the location of the LCD module 30.

Describing more in detail, the hook projections 41 are formed on a side end line of the front cover 40 and extended rearward to be inserted into the hook portions 13. Front ends of the hook projections 41 are bend to define insertion ends 43 inserted into the hook portions 13. Particularly, two hook projections 41 are provided in pairs to reliably prevent the front cover 40 from moving.

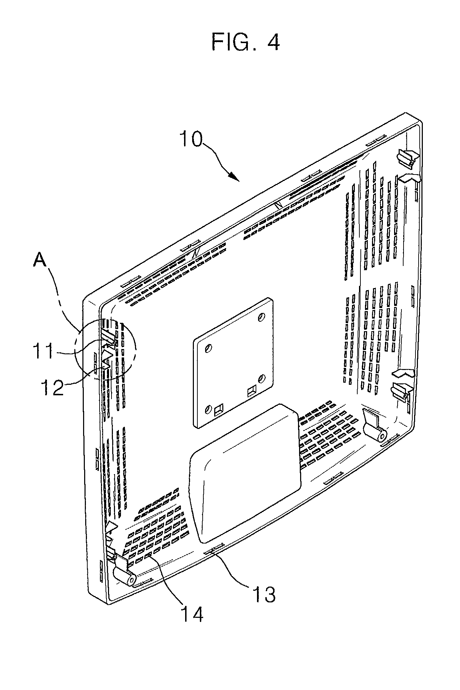

FIG. 4 shows a front perspective view of the back cover of the flat display panel fixing arrangement according to the present invention.

As described above, the back cover is provided with the hook portions 13 formed on the side portion of the back cover and spaced away from each other at a predetermined distance, the heat release holes 14 for releasing heat generated by the LCD module 30, the guide portions 12 for guiding and aligning the fixing frame 20 and the LCD module 30 on the back cover 10, and the fixing portions 11 in which the fasteners 50 are inserted.

Describing more in detail, the fixing portions 11 and the guide portions 12 are formed on the four corners of the back cover 10. Preferably at least one guide portion and one fixing portion are provided in each corner. In order to reinforce the coupling strength, the fixing portions 11 and the guide portions 12 can be further formed. The guide portions 12 may be formed in the vicinity of the fixing portions 11 to reliably guide the aligning location of the fixing frame 20 and the LCD module 30.

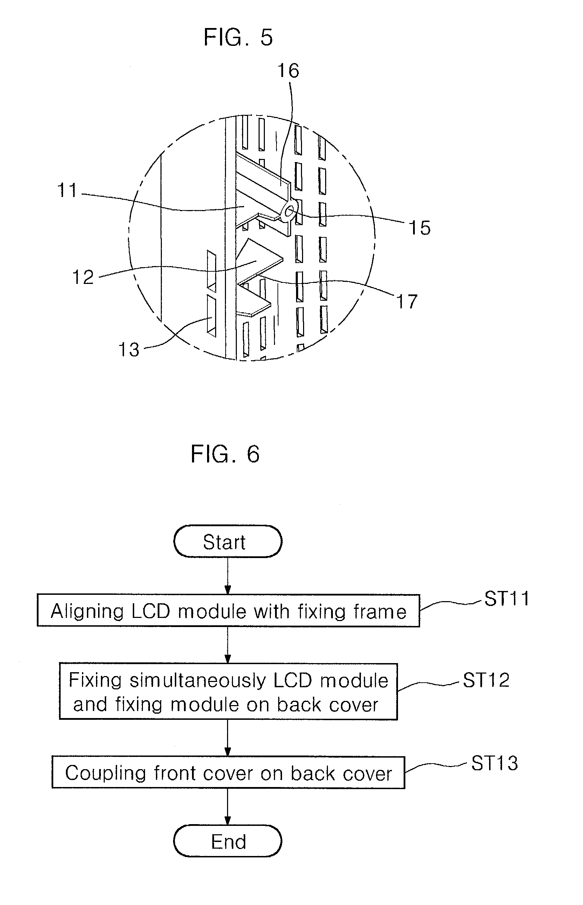

FIG. 5 shows an enlarged view of a circled portion "A" of FIG. 4.

As shown in the drawing, the guide portion 12 is provided with an aligning groove 17 to accurately align the fixing frame 20 and the LCD module 30 with each other. As the fixing frame 20 is seated on the aligning groove 17, the fixing frame 20 and the LCD module 30 can be stably supported with respect to the back cover 10.

In addition, the fixing portion 11 includes a boss provided with a fixing hole 15 in which the fastener 50 is inserted and a plurality of reinforcing ribs 16 for connecting the main body of the back cover 10 to the boss to improve the strength of the boss. The reinforcing ribs 16 may be designed to be recessed in a predetermined shape so as to induce the stable alignment of the fixing frame 20.

FIG. 6 shows a flowchart illustrating the flat display panel fixing method according to the present invention.

As described above, the LCD module and the fixing frame are simultaneously fixed on the inner surface of the back cover by the single group of fastener, and the front cover is fixed on the back cover by hook means.

Describing more in detail, the LCD module 30 is aligned with the fixing frame 20 by the aligning guide 21 (ST11). When the LCD module 30 is aligned, the panel fixing portions 31 are also aligned with the frame fixing portions 22. Particularly, the LCD module 30 is aligned with the fixing frame 20 such that holes formed on the panel fixing portions 31 are aligned with holes formed on the frame fixing portions 22.

The assembly of the LCD module 30 and the fixing frame 20 that are accurately aligned with each other is aligned with the back cover 10, and the fasteners 50 are inserted to fix them (ST12). A feature of the present invention is to simultaneously fix the LCD module 30 and the fixing frame 20 on the back cover 10 by the single group of fastener. In addition, another feature of the present invention is to fix the LCD module 30 and the fixing frame 20 not on the front cover 40 but on the back cover 10 with a high strength.

Afterwards, the front cover 40 is fixed on the back cover 10 by the simple hook means (ST13). As described above, the hook means includes the hook projections and the hook portions. That is, since no additional part is fixed on the front cover, the self-gravity of the front cover is low, allowing the front cover to be fixed on the back cover 10 by a simple coupling structure without using the strong coupling member such as the screws. This enhances the working convenience and speed.

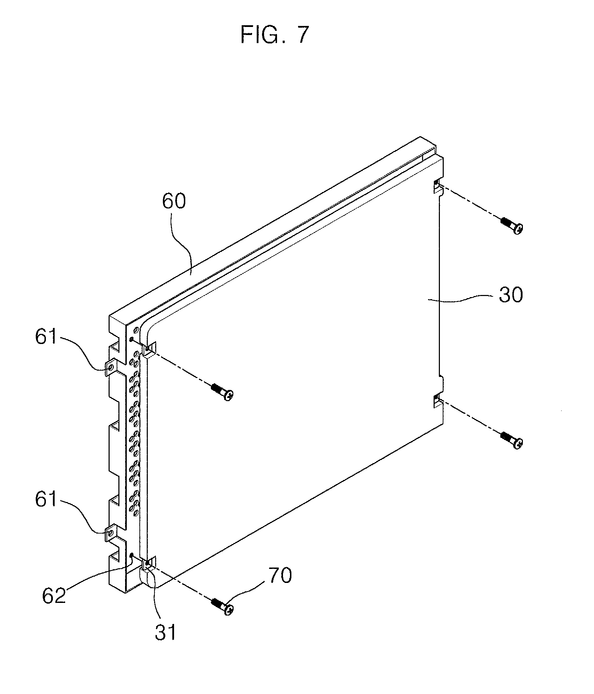

FIG. 7 shows a perspective view of a flat panel display arrangement according to a second embodiment of the present invention.

This embodiment is identical to the first embodiment except that the LCD module and the fixing frame are not simultaneously fixed on the back cover but independently fixed on the same

Describing more in detail, a fixing frame 60 of this embodiment includes fixing holes 62 aligned with the fixing portions 31 to fix the LCD module 30 on the fixing frame 60 and fixing brackets 61 each having a fixing hole to fix the fixing frame 60 on the back cover 10. There is further provided module fasteners 70 for fixing the LCD module 30 on the fixing frame 60.

According to the above-described structure, an additional process for coupling the LCD module 30 to the fixing frame 60 may be added. That is, a process for coupling the LCD module 30 to the fixing frame 60 before the fixing frame 60 is coupled to the back cover 10 is required.

The structure of this embodiment will be effectively used when the LCD module 30 and the fixing frame 60 are differently designed in their dimension. However, when the LCD module 30 is appropriately designed, the LCD module 30 may be fixed on the inner surface of the back cover 10 without using the fixing frame 60.

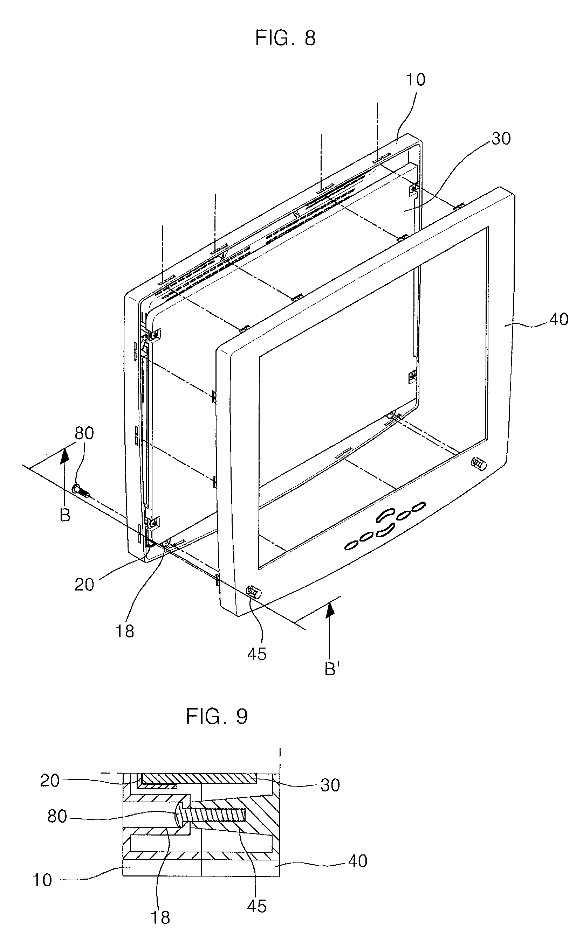

FIG. 8 shows a perspective view of a flat panel display arrangement according to a third embodiment of the present invention, and FIG. 9 shows a sectional view taken along the line B-B' of FIG. 8.

Referring to FIGs. 8 and 9, this embodiment is identical to the first and second embodiments except for the structure for fixing the front cover to the back cover. That is, when the front cover 40 is securely fixed on the back cover 10 by only the support force of the hook means including the hook projections 41 and the hook portions 13, fasteners such as screws may be additionally used.

That is, a first cover-fixing portion 18 is formed on at least one corner portion of the back cover 10, and a second cover-fixing portion 45 is formed on at least one corner of the front cover 40. In addition, the first and second cover-fixing portions 18 and 45 are provided with a predetermined insertion hole in which a cover fastener 80 is inserted.

Also, the first cover-fixing portion 18 can help the coupling of the back cover 10 and the front cover 40. In addition, the first cover-fixing portion 18 may further function as guide means for the LCD module 30 when it is formed on a location contactable the outer circumference of the LCD module. To achieve this, the first and second cover-fixing portions 18 and 45 can be formed on two locations of the back cover 10 at the lower left and right sides based on the entire flat display monitor.

As aforementioned in the first embodiment, it is natural that the front cover 40 and the back cover 10 can be coupled to each other by the hook means including the hook projections 41 and the hook portions 13. Also, by using the cover fastener 80 like the third embodiment, the front cover 40 and the back cover 10 can be more firmly coupled. However, when the number of first and second cover-fixing portions 18 and 45 is increased, the front cover 40 can be fixed to the back cover 10 without using the hook means. At this point, each of the first and second cover-fixing portions 18 and 45 are formed on at least four corners of the monitor.

According to the above-described present invention, since the flat display panel is fixed on the inner surface of the back cover having a relatively strong strength, the reliability of a process for manufacturing the flat display monitor can be improved.

In addition, the number of the screws used for assembly parts of the flat display monitor can be saved.

It will be apparent to those skilled in the art that various modifications and variations can be made in the present invention. Thus, it is intended that the present invention covers the modifications and variations of this invention provided they come within the scope of the appended claims and their equivalents.

## Claims

1. A flat display panel fixing arrangement comprising:
a flat display panel (30);
a fixing frame (20)for supporting the flat display panel;
a back cover (10) having guide means (12) for guiding aligning locations of the fixing frame and/or the flat display panel and fixing means for fixing the fixing frame (20) and/or the flat display panel (30); and
a front cover (40) for receiving the flat display panel (30) and the fixing frame (20), the front cover (40) being coupled on the back cover (10).

2. The flat display panel fixing arrangement according to claim 1, wherein the guide means (12) comprises a plurality of guide portions formed on an inner side surface of the back cover.

3. The flat display panel fixing arrangement according to claim 1, wherein the guide means (12) is formed on a side end line of the back cover, and the guide means comprising a plurality of guide portions provided with an aligning groove (17).

4. The flat display panel fixing arrangement according to claim 1, wherein the fixing means comprises:
a boss provided with a fixing hole (15) in which a fastener is inserted; and
a reinforcing rib (16) for supporting the boss.

5. The flat display panel fixing arrangement according to claim 1, wherein the guide means (12) is disposed in the vicinity of the fixing means (11).

6. The flat display panel fixing arrangement according to claim 1, wherein the guide means (12) and/or the fixing means (11) is formed at at least one corner of the back cover.

7. The flat display panel fixing arrangement according to claim 1, wherein the front cover (40) is coupled to the back cover (10) by hook means (13,41).

8. The flat display panel fixing arrangement according to claim 1, wherein the front cover (40) is coupled to the back cover (10) by a hook projection (41) and a hook portion (13) corresponding to the hook projection.

9. The flat display panel fixing arrangement according to claim 1, wherein the front cover (40) is coupled to the back cover (10) by a cover fastener (80).

10. The flat display panel fixing arrangement according to claim 1 further comprising a support rib formed (44) on an inner surface of a side portion of the front panel to support the flat display panel.

11. The flat display panel fixing arrangement according to claim 1, wherein the fixing means comprises:
a boss provided with a fixing hole (15); and
a fastener (50) inserted simultaneously through the fixing hole (15) of the boss and holes (62) formed on the fixing frame (60) and the flat display panel (30).

12. The flat display panel fixing arrangement according to claim 1, wherein the panel display panel is provided with a panel fixing portion (31) formed corresponding to the fixing means; and the fixing frame is provided with a frame fixing portion (22) formed corresponding to the fixing means.

13. The flat display panel fixing arrangement according to claim 1, wherein the fixing means comprises a boss provided with a fixing hole (15) in which a fastener is inserted; and
the fixing frame is provided with a fixing bracket (61) in which the fastener (70) is inserted, the fixing bracket being formed corresponding to the boss.

14. The flat display panel fixing arrangement according to claim 1, wherein the fixing frame is provided with an aligning guide (21) for accurately aligning the flat display panel on the fixing frame.

15. A flat display monitor comprising:
a high strength back cover (10) having a rear surface on which a support structure is coupled;
a fixing frame (20) and/or a flat display panel (30) fixed on an inner surface of the back cover (10) by fixing means; and
a front cover (40) for receiving the fixing frame (20) and/or the flat display panel (30), the front cover (40) being fixed on a front surface of the back cover (10).

16. The flat display monitor according to claim 15, wherein the fixing means comprises:
a fixing portion (11) formed on an inner surface of the back cover;
a frame fixing portion (22) and/or a panel fixing portion (31), the frame fixing portion (22) being formed on the fixing frame (20) to correspond to the fixing portion (11) and the panel fixing portion (31) being formed on the flat display panel (30) to correspond to the fixing portion (11); and
a fastener (50) inserted through the fixing portion and the frame fixing portion and/or the panel fixing portion.

17. The flat display monitor according to claim 15, wherein the flat display panel is an LCD module.

18. The flat display monitor according to claim 15, wherein the front cover is coupled to the back cover by hook means (13,41).

19. The flat display monitor according to claim 15, wherein the front cover is coupled to the back cover by a screw (80).

20. A method for fixing a flat display panel, the method comprising the steps of:
aligning the flat display panel with a back cover (ST11);
fixing the flat display panel on the back cover using a fastener (ST12); and
fixing a front cover on the back cover (ST13).

21. The method according to claim 20, wherein after being aligned with a fixing frame (20), the flat display panel (30) is fixed together with the fixing frame (20) on the back cover (10) by the fastener.

22. The method according to claim 20, wherein after being aligned with a fixing frame (20), the flat display panel (30) is fixed on the back cover (10) by the fixing frame (20).

23. The method according to claim 20, wherein the back cover (10) and the front cover (40) are fixed to each other by hook means (13,41).

24. The method according to claim 20, wherein the front cover (40) is fixed to the back cover (10) by a screw (80).
